# EUROPEAN PATENT APPLICATION

(11) **EP 4 778 767 A1**
(43) Date of publication of application: **22.07.2026**
(21) Application number: 26151317.0
(22) Date of filing: 12.01.2026
(51) Int. Cl.: B60K 35/81, B60W 50/14

(54) **DISPLAY CONTROL DEVICE**

(30) Priority: 21.01.2025 JP 2025008587
(71) Applicant: Toyota Jidosha Kabushiki Kaisha, Toyota-shi, Aichi-ken 471-8571 (JP)
(72) Inventor: IMAI, Takanori, Toyota-shi, 471-8571 (JP); NODA, Naoki, Toyota-shi, 471-8571 (JP); MASAMURA, Kouichi, Toyota-shi, 471-8571 (JP); ONISHI, Sae, Toyota-shi, 471-8571 (JP); TANAKA, Yuki, Toyota-shi, 471-8571 (JP)
(74) Representative: J A Kemp LLP

(57) **Abstract**

A display control device includes: an acquisition unit that acquires an operation by a user relating to a control level of a behavior control in a vehicle; and a display control unit that displays, on a display unit provided in the vehicle, the control level in which the adjustment of the operation is reflected.

## Description

### Technical Field

This disclosure relates to a display control device.

### Related Art

Japanese Patent Application Laid-open (JP-A) No. 2015-048006 discloses a technology relating to a driving control device that sufficiently enhances the effect of collision avoidance by automatic braking while stabilizing the behavior of a vehicle. JP-A No. 2015-048006 describes switches for selecting between activating and prohibiting activation of behavior control.

In this connection, in relation to behavior control of a vehicle, there is room for improvement in terms of making the user aware of the state of the behavior control.

### SUMMARY

It is an object of this disclosure to provide a display control device that can allow a user to easily perceive the control level for behavior control of a vehicle when the user adjusts the control level.

A display control device pertaining to a first aspect includes: an acquisition unit that acquires an operation by a user relating to a control level for behavior control of a vehicle; and a display control unit that displays, on a display unit provided in the vehicle, the control level in which an adjustment made by the operation is reflected.

In the display control device pertaining to the first aspect, adjustments to the control level made by the user are reflected in the display. This allows the user to be able to easily perceive the state of the control level.

A display control device pertaining to a second aspect is the first aspect, wherein the display control unit displays the control level by means of a display mode in which it changes a length or size of the control level in accordance with the degree of the adjusted control level. According to the display control device pertaining to the second aspect, the user can easily perceive differences in the degree of the control level.

A display control device pertaining to a third aspect is the first or second aspect, wherein when the control level is a predetermined lowness, the display control unit displays a display mode indicating that the level of driving proficiency is high, and when an operation to raise the control level from the predetermined lowness is performed, the display control unit inhibitorily controls the display mode indicating that the level of proficiency is high. According to the display control device of the third aspect, confusion in the user can be inhibited when the degree of an intervention by the behavior control becomes stronger.

A display control device pertaining to a fourth aspect is any one of the first to third aspects, wherein when an operation to adjust the control level is made in the operation, the display control unit displays the control level for a predetermined amount of time in a predetermined central region of the display unit and after the elapse of the predetermined amount of time stops the display in the central region. According to the display control device of the fourth aspect, the control level can be displayed at just the necessary timing in a position that is easy to see.

A display control device pertaining to a fifth aspect is any one of the first to fourth aspects, wherein the display control unit changes the color scheme of an indicator indicating the control level in accordance with stages of the control level. According to the fifth aspect, by changing the color scheme pattern, the user can intuitively grasp changes in the control level.

A display control device pertaining to a sixth aspect is the fourth aspect, wherein when a specific type of behavior control is activated when the control level is a predetermined lowness, the display control unit flashingly displays an indicator of a display mode indicating that the level of driving proficiency is high and a behavior control indicator. According to the display control device of the sixth aspect, the fact that behavior control has been activated can be conveyed to the user so that the user can perceive it in a way that distinguishes it from a malfunction.

As described above, the display control device pertaining to this disclosure can allow a user to easily perceive the control level for behavior control of a vehicle when the user adjusts the control level.

### BRIEF DESCRIPTION OF THE DRAWINGS

FIG. 1 is block diagram showing hardware configurations of a vehicle;
FIG. 2 is a drawing showing an example of a control level switch;
FIG. 3 is a drawing showing the display of various types of image information in a vehicle information display region 50;
FIG. 4 is a drawing showing examples of modes for displaying a control level according to the degree of the control level;
FIG. 5 is a drawing for describing a timing for switching the display of the control level;
FIG. 6 is a picture in a case where the control level is displayed between two meter images;
FIG. 7 is a flowchart showing the flow of a specific process executed by a meter ECU; and
FIG. 8 is an example of a flashing display.

### DETAILED DESCRIPTION

A vehicle 10 pertaining to an embodiment will now be described below.

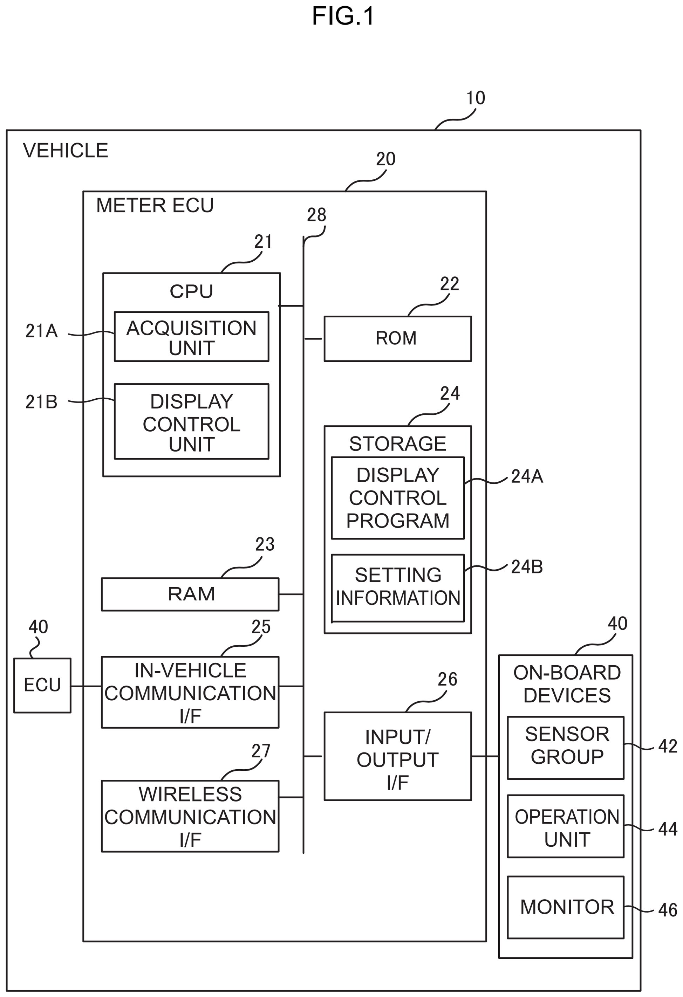

FIG. 1 is a block diagram showing hardware configurations of the vehicle 10. As shown in FIG. 1, the vehicle 10 includes a meter electronic control unit (ECU) 20. The vehicle 10 is an example of a "vehicle" of this disclosure, and the meter ECU 20 is an example of a "display control device" of this disclosure.

The meter ECU 20 is configured to include a central processing unit (CPU) 21, a read-only memory (ROM) 22, a random-access memory (RAM) 23, a storage 24, an in-vehicle communication interface (I/F) 25, an input/output interface (I/F) 26, and a wireless communication interface (I/F) 27. The CPU 21, the ROM 22, the RAM 23, the storage 24, the in-vehicle communication interface 25, the input/output interface 26, and the wireless communication interface 27 are communicably connected to each other via an internal bus 28.

The CPU 21 is a central arithmetic processing unit, executes various types of programs, and controls each part of the meter ECU 20. That is, the CPU 21 reads programs from the ROM 22 or the storage 24 and executes the programs using the RAM 23 as a workspace. The CPU 21 controls each of the above configurations and performs various types of arithmetic processing in accordance with the programs recorded in the ROM 22 or the storage 24.

The ROM 22 stores various types of programs and various types of data. The RAM 23 temporarily stores programs or data as a workspace.

The storage 24 is configured by a storage device such as an embedded Multi-Media Card (eMMC) or universal flash storage (UFS) and stores various types of programs and various types of data. The storage 24 stores a display control program 24A and setting information 24B. The display control program 24A is a program for causing the CPU 21 to execute a specific process described later. The setting information 24B stores display settings according to a control level, for example.

The in-vehicle communication interface 25 is an interface for connecting to another ECU 30. The interface uses the CAN protocol communication standard. The in-vehicle communication interface 25 is connected to an external bus 29. It will be noted that although the drawings do not show this, in addition to the ECU 30, multiple ECUs are provided for different functions of the vehicle 10.

The input/output interface 26 is an interface for communicating with on-board devices 40 installed in the vehicle 10.

The on-board devices 40 are various types of devices installed in the vehicle 10. The vehicle 10 includes, as an example of the on-board devices 40, a sensor group 42, an operation unit 44, and a monitor 46.

The sensor group 42 includes, for example, sensors for detecting the state of the vehicle 10 and conditions in the area around the vehicle 10, such as a 3D-LiDAR sensor, a mmWave sensor, an infrared sensor, a turn signal sensor, an accelerator pedal position sensor, a shift sensor, a vehicle speed sensor, a steering angle sensor, an angular velocity sensor, a global positioning system (GPS) sensor, an ambient light sensor, a gyro sensor, a steering angle sensor, and an acceleration sensor, as well as multiple cameras that capture images of the area around the vehicle 10. The sensor group 42 outputs the detection results of the sensors and the images captured by the cameras to the meter ECU 20 and the ECU 30.

The operation unit 44 includes various types of switches and levers that receive operations by the driver of the vehicle 10. The operation unit 44 is configured to include an ignition switch, a shift lever, and paddle shifters, for example. The operation unit 44 outputs the operation content of the various types of switches and levers to the meter ECU 20 and the ECU 30. It will be noted that the "user" mentioned below is a passenger including a driver who can see a meter image 50A in the vehicle 10.

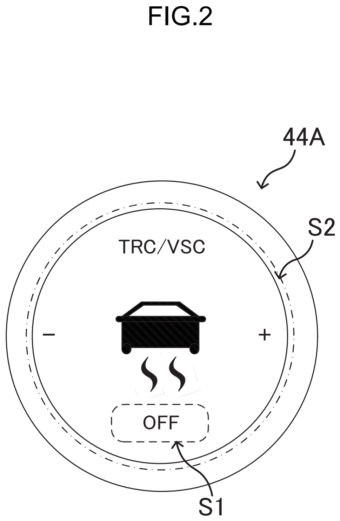

The operation unit 44 includes a control level switch 44A. FIG. 2 is a drawing showing an example of the control level switch 44A. The control level switch 44A is a switch for making adjustments in regard to behavior control by a driving assist function in the vehicle 10 and includes an on/off switch function (S1) for switching the behavior control on and off and a dial switch function (S2). The on/off switch function allows the user to switch the behavior control on and off by depressing a button. The dial switch function allows the user to adjust the degree of the control level, that is, the magnitude (+/-) of the behavior control, by turning a dial. In this example, a control level switch for behavior control by a "TRC/VSC" driving assist function will be described.

Here, behavior control interventions will be described. When, for example, an advanced driver drives on a circuit or on a dirt road or drifts, behavior control by TRC/VSC is superfluous. This is because TRC/VSC controls the vehicle in a direction that stabilizes it, so it becomes the opposite of control when the driver intentionally wants to change the attitude of the vehicle. For that reason, since it is envisioned that advanced drivers will want to inhibit behavior control interventions, what is here called an "EXPERT" mode is used in cases where the behavior control is lowered and is a mode in which behavior control interventions are inhibited.

The monitor 46 is provided in a meter panel disposed in front of the driver's seat in the vehicle 10 and is a meter display for displaying activation suggestions pertaining to the functions of the vehicle 10 and images pertaining to explanations of the functions. The monitor 46 is an example of a "display unit" of this disclosure.

The wireless communication interface 27 is a wireless communication module for communicating with external devices. The wireless communication module uses a communication standard such as 5G, LTE, Wi-Fi (registered trademark), or Bluetooth (registered trademark).

Furthermore, the CPU 21 of the meter ECU 20 has an acquisition unit 21A and a display control unit 21B as functional configurations. These functional configurations are realized by the CPU 21 reading and executing the display control program 24A stored in the storage 24. The display control unit 21B is an example of a "display control unit" of this disclosure.

The acquisition unit 21A acquires operations of the control level switch 44A relating to the control level. The acquired operations are switch operations of the control level switch 44A, and are operations to switch the behavior control by the driving assist function on and off and operations to adjust the degree of the control level (the magnitude of the behavior control) when the user operates the dial switch after switching on the behavior control by the driving assist function.

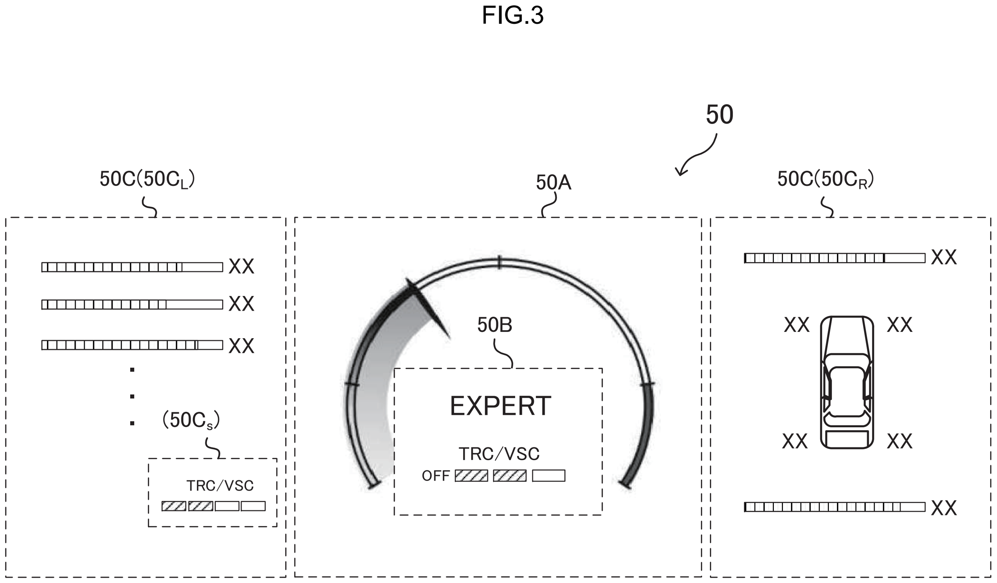

The display control unit 21B performs display control relating to what is displayed on the monitor 46. For example, as shown in FIG. 3, the display control unit 21B causes the monitor 46 to display various types of image information in a vehicle information display region 50. The vehicle information display region 50 includes a circular arc-shaped meter image 50A, a central image 50B located inside the circular arc-shaped meter image 50A, and actuation state display regions 50C (50C_{L} and 50C_{R}) disposed on the left and right sides of the meter image 50A. The actuation state display regions 50C are regions for displaying actuation states of functions of the vehicle 10 and are regions that display tell-tale values and the like determined in regulations. The display control unit 21B displays, in any of predetermined positions in the central region 50B and the actuation state display regions 50C, the control level in which operation adjustments are reflected.

The display control unit 21B changes the length of a stage indicator in accordance with the degree of the stage of the control level. Furthermore, when the control level is a predetermined lowness, the display control unit 21B displays "EXPERT" as a display mode indicating that the level of driving proficiency is high. Furthermore, the setting mode for the control level with a lowness corresponding to the "EXPERT" stage is set to the "EXPERT" mode. By displaying "TRC/VSC" indicating the function name of the driving assist function instead of placing a display of "EXPERT" above the stage indicator, the driver can grasp the control target at a glance. Furthermore, in a case where the display control unit 21B displays the control level by means of the size of an illustration such as a circle instead of a stage indicator, the display control unit 21B need only change the size.

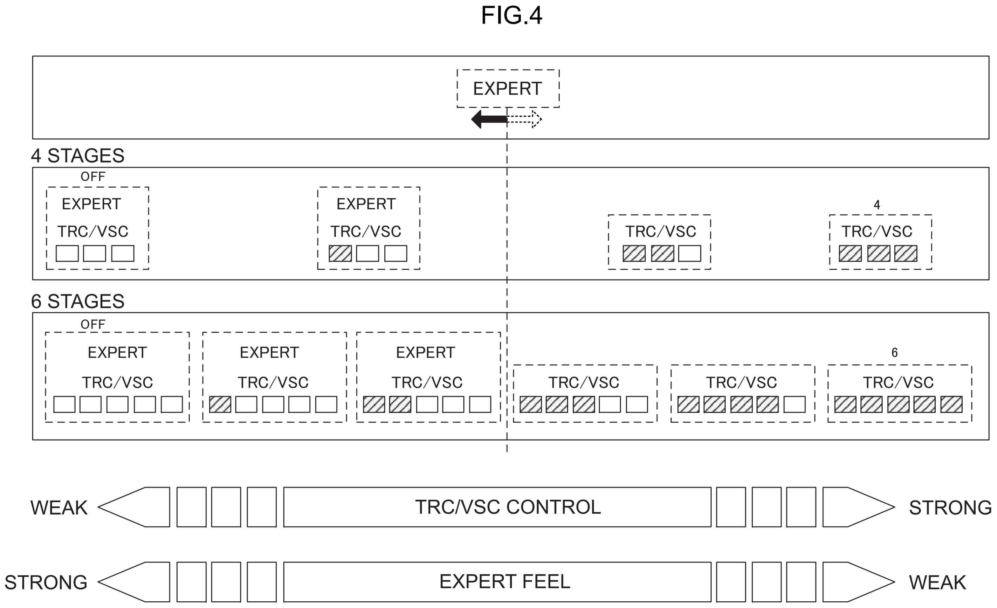

Display modes according to the degree of the control level that is adjusted by the control level switch 44A will now be described. FIG. 4 is a drawing showing an example of modes for displaying the control level according to the degree of the control level. FIG. 4 shows modes for displaying the stage indicator of the control level for each of four stages and six stages in regard to the control level of the behavior control by the "TRC/VSC" driving assist function. The stage indicator has, from the left, an "OFF" indicator and indicators for different stages. When the stage indicator is set to "OFF", all stage portions of the control level are displayed in gray, indicating that the control level is the lowest. When the control level is raised by an operation of the control level switch 44A, the stage portions of the control level are flashingly displayed in a designated color scheme, so that each time the stage increases, the stage portions are flashingly displayed. Furthermore, the density of the color scheme for the characters and stage indicators may be varied such that lower stages have a higher brightness, saturation, and contrast and higher stages have a lower brightness, saturation, and contrast, or vice versa. Furthermore, the color scheme indicating the control level may also be changed in accordance with the stage, such as using a greenish color scheme for stages where the control level is higher and a reddish color scheme for stages where the control level is lower. Changing the pattern of the color scheme allows the user to easily intuitively grasp changes in the control level.

The lower portion of FIG. 4 shows the relationship of the magnitudes of "TRC/VSC Control" and "EXPERT Feel" relative to the degree of the control level. In "TRC/VSC Control", the higher the control level is, the stronger the degree of behavior control is, and the lower the control level is, the weaker the degree of behavior control is. In "EXPERT Feel", the lower the control level is, the stronger the level of driving proficiency is, and the higher the control level is, the weaker the level of driving proficiency is. Furthermore, when an operation to raise the control level from a lower state is performed, the display control unit 21B performs inhibitory control so as to not display "EXPERT". The criterion for whether to display "EXPERT" is such that if, for example, there are four stages for the control level, the display control unit 21B performs control to display "EXPERT" in the case of the first stage and the second stage of the control level and performs inhibitory control to not display "EXPERT" at the third and subsequent stage. Furthermore, the display control unit 21B may indicate the inhibitory control using shading for the "EXPERT" indicator in accordance with the stage so that, for example, if there are five stages for the control level, in the first stage of the five stages the display control unit 21B displays a normal "EXPERT" indicator, in the second stage and the third stage the display control unit 21B displays the "EXPERT" indicator more faintly in accordance with the stage, and at the fourth stage the display control unit 21B performs control to disappear the "EXPERT" indicator. It will be noted that although modes where the control level is divided into stages and the stages are displayed have been described as an example, the display control unit 21B is not limited to this and may also use a display mode in which it changes the length of a bar-shaped indicator to indicate continuous values as numerical values.

Changing the indicator length in accordance with the degree of the stage of the control level in this way can intuitively convey the control level to the user and allow the user to easily grasp the control level at points in time when the user looks at it. Furthermore, the inhibitory control can inhibit confusion in the user when the degree of intervention by the behavior control becomes stronger.

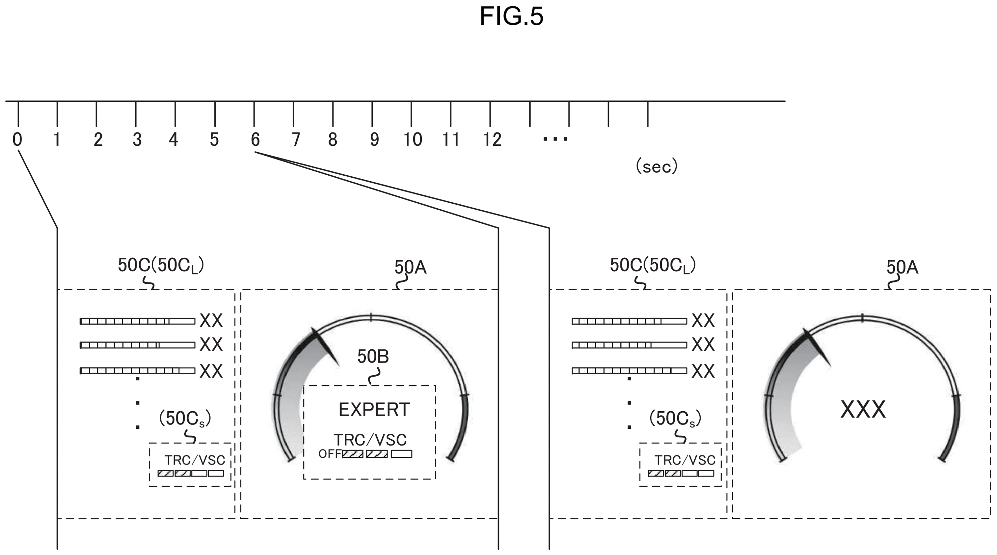

Next, the timing for switching the display of the control level will be described. The display control unit 21B switches the display when an operation to adjust the control level has been performed. FIG. 5 is a drawing for describing a timing for switching the display of the control level. In the time from 0 second, which is the point in time when the adjustment to the control level is performed, to 6 seconds, the display control unit 21B displays the adjusted control level by means of a popup in the central region 50B. At this time, the display control unit 21B simultaneously displays the control level also in the actuation state display region 50C_{L} (50C_{S}). After the elapse of 6 seconds, the display control unit 21B stops the display in the central region 50B. Furthermore, in a case where the display control unit 21B does not display the control level in a predetermined region (50Cs) of the actuation state display region 50C_{L} for 6 seconds, the display control unit 21B displays the control level in the display of the predetermined region (50C_{S}) of the actuation state display region 50C_{L} after the elapse of 6 seconds. The predetermined region (50Cs) is a region smaller in size than the central region 50B and is disposed in a position offset from the central region 50B relative to the user's line of sight. Furthermore, in the display of the predetermined region (50C_{S}), the display control unit 21B displays only the stage indicator and the function name "TRC/VSC" without displaying "EXPERT".

In this way, at a timing just after an operation, the display control unit 21B displays the control level in a position and size that are easy for the user to see, and at a timing when a certain amount of time elapses after the operation, the display control unit 21B moves the display of the control level to the edge and reduces its display size. This can mitigate annoyance caused by displaying the control level.

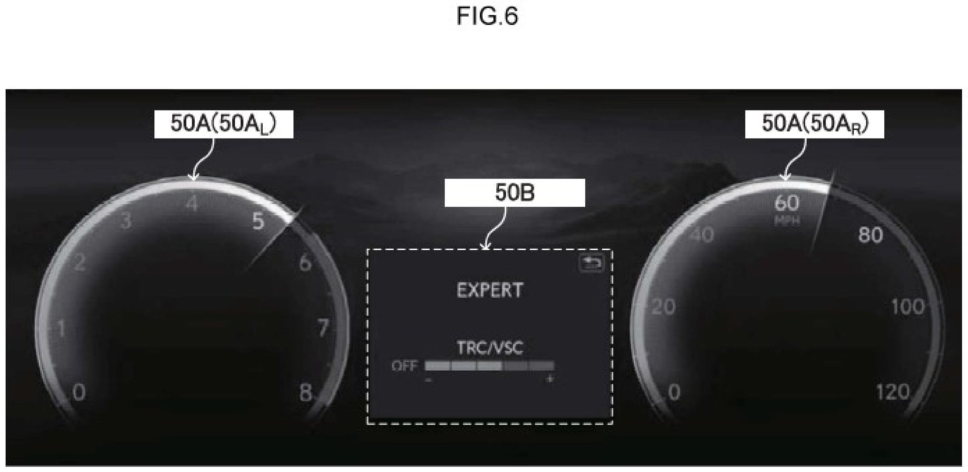

Furthermore, the mode of displaying the image display region is not limited to displaying the one meter image 50A. FIG. 6 is a picture in a case where the control level is displayed between two meter images. As shown in FIG. 6, two meter images 50A (50A_{L}, 50A_{R}) are disposed, the central region 50B is provided between the meter images, and the control level is displayed in the central region 50B.

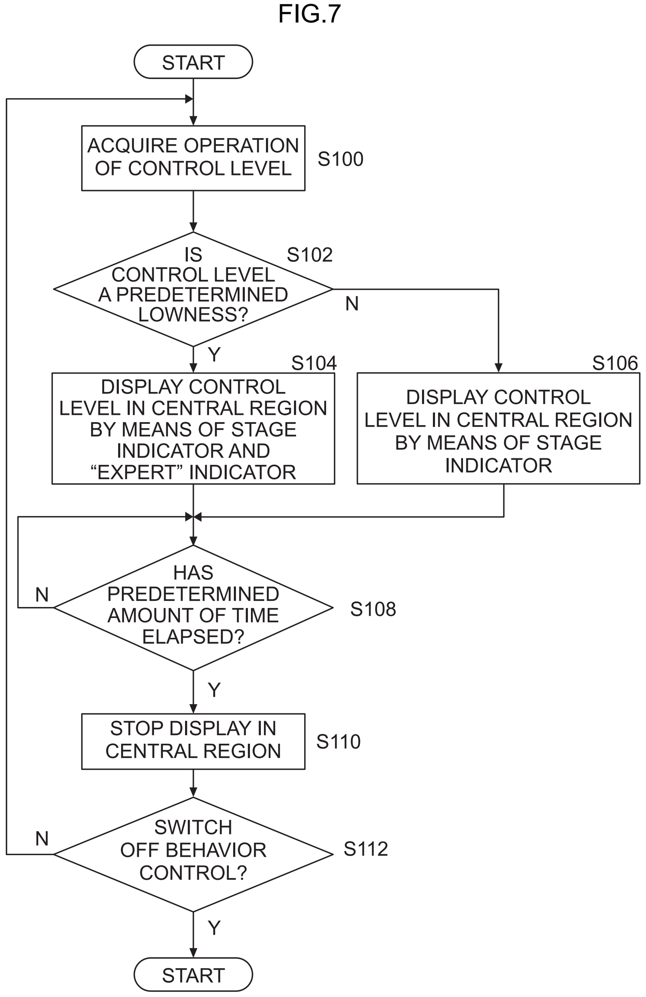

FIG. 7 is a flowchart showing the flow of a specific process executed by the meter ECU 20. The specific process is performed by the CPU 21 reading from the storage 24, loading to the RAM 21, and executing the display control program 24A. As an example, the specific process is repeatedly automatically performed each time a certain amount of time elapses.

In step S100, the CPU 21 acquires an operation of the control level of the control level switch 44A.

In step S102, the CPU 21 determines whether the control level adjusted by the operation is the predetermined lowness. When it is the predetermined lowness, the CPU 21 moves to step S104, and when it is not the predetermined lowness, the CPU 21 moves to step S106.

In step S104, the CPU 21 displays the control level in the central region 50B by means of a stage indicator having a length according to the degree of the adjusted control level and the "EXPERT" indicator according to the control level.

In step S106, the CPU 21 displays the control level in the central region 50B by means of a stage indicator having a length according to the degree of the adjusted control level.

In step S108, the CPU 21 determines whether a predetermined amount of time has elapsed. When the predetermined amount of time has elapsed, the CPU 21 moves to step S110, and when the predetermined amount of time has not elapsed, the CPU 21 repeats step S108.

In step S110, the CPU 21 stops the display in the central region 50B.

In step S112, the CPU 21 determines whether to switch off the behavior control. The condition for switching off the behavior control is a case where the control level switch 44A has been depressed to off or where the driving of the vehicle 10 has been stopped. When the behavior control is to be switched off, the CPU 21 ends the specific process, and when the behavior control is not to be switched off, the CPU 21 returns to step S100 and repeatedly updates the display of the control level.

Because of the above configuration, according to the meter ECU 20, the meter ECU 20 can allow the user to easily perceive the control level of behavior control for the vehicle when the user adjusts the control level.

### [Second Embodiment]

A second embodiment is an aspect where the display control unit 21B flashingly displays the "EXPERT" indicator and a behavior control indicator. Conventionally, when multiple behavior controls such as VSC, TRC, and ABS have been activated, a slip indicator has been used as a substitute to notify the driver of the activation of the controls by causing it to flash, and there has been no method to display these controls. Since the slip indicator also flashes when there is a malfunction, there has been the potential to cause confusion for the driver.

Thus, in this embodiment, when the "EXPERT" mode setting is switched on and specific types of behavior control by VSC, TRC, and ABS are activated, the display control unit 21B flashingly displays the "EXPERT" indicator and a behavior control indicator (slip indicator).

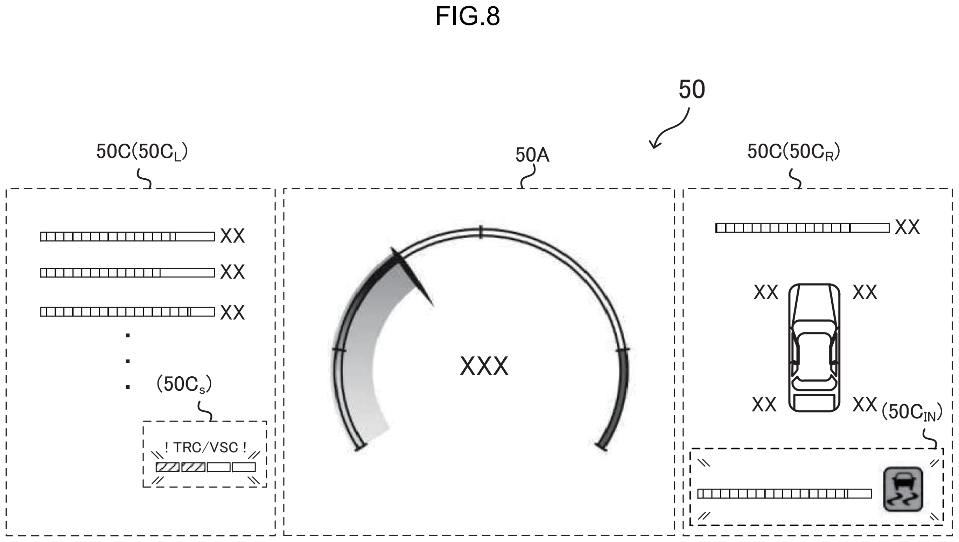

FIG. 8 is an example of a flashing display. The display control unit 21B flashingly displays the predetermined region (50Cs) "EXPERT" indicator and a slip indicator (50C_{IN}). Because of this, the fact that behavior control by any of VSC, TRC, and ABS has been activated in the "EXPERT" mode can be conveyed to the user so that the user can perceive it in a way that distinguishes it from a malfunction.

### (Other)

Although embodiments of this disclosure have been described in detail above with reference to the attached drawings, the technical scope of this disclosure is not limited to these examples. It will be apparent that a variety of example changes or example modifications within the category of the technical thought set forth in the claims may occur to a person of ordinary skill in the technical field of this disclosure, and it is to be understood that these example changes or example modifications naturally belong to the technical scope of this disclosure.

Furthermore, the advantageous effects described in the above embodiments are illustrative or exemplary and are not limited to those described in the above embodiments. Namely, the technology pertaining to this disclosure may exhibit, together with or instead of the advantageous effects described in the above embodiments, other advantageous effects that will be apparent to a person of ordinary skill in the technical field of this disclosure from the descriptions in the above embodiments.

The process described in the above embodiments can also be realized by a dedicated hardware circuit. In this case, the process may be executed by one hardware circuit or multiple hardware circuits.

In the above embodiments, the display control program 24A was stored in the storage 24. However, the display control program 24A is not limited to this and may also be stored in the ROM 22.

In the above embodiments, the monitor 46, which is a meter display, was described as an example of the "display unit" of this disclosure, but examples of the "display unit" are not limited to a meter display. For example, the "display unit" may be another display, such as a center display or a head-up display. Furthermore, the "display unit" may be a combination of multiple displays, such as a meter display and a center display.

In the above embodiments, the meter ECU 20 executed the specific process shown in FIG. 7. However, the specific process is not limited to this and may also be executed by the meter ECU 20 and another ECU in cooperation with each other.

It will be noted that the specific process that the CPU 21 executed by reading software (a program) in the above embodiments may also be executed by various types of processors other than a CPU. Examples of processors in this case include programmable logic devices (PLDs) whose circuit configuration can be changed after manufacture, such as field-programmable gate arrays (FPGAs), and dedicated electrical circuits that are processors having a circuit configuration dedicatedly designed for executing specific processes, such as application-specific integrated circuits (ASICs). Furthermore, the specific process may be executed by one of these various types of processors or may be executed by a combination of two or more processors of the same type or different types (e.g., multiple FPGAs, a combination of a CPU and an FPGA, etc.). Furthermore, the hardware structures of these various types of processors are more specifically electrical circuits in which circuit elements such as semiconductor elements are combined.

Furthermore, although in the above embodiments an aspect was described where the display control program 24A was stored (installed) beforehand in the storage 24, the display control program 24A is not limited to this. The display control program 24A may also be provided in a form in which it is recorded in a recording medium such as a compact disc read-only memory (CD-ROM), a digital versatile disc read-only memory (DVD-ROM), and a universal serial bus (USB) memory. Furthermore, the display control program 24A may also take a form in which it is downloaded via a network from an external device. It will be noted that the technology of this disclosure can also be applied to programs and program products.

## Claims

1. A display control device comprising:
an acquisition unit that acquires an operation by a user relating to a control level for behavior control of a vehicle; and
a display control unit that displays, on a display unit provided in the vehicle, the control level in which an adjustment made by the operation is reflected.

2. The display control device of claim 1, wherein the display control unit displays the control level by means of a display mode in which it changes a length or size of the control level in accordance with the degree of the adjusted control level.

3. The display control device of claim 1, wherein when the control level is a predetermined lowness, the display control unit displays a display mode indicating that the level of driving proficiency is high, and when an operation to raise the control level from the predetermined lowness is performed, the display control unit inhibitorily controls the display mode indicating that the level of proficiency is high.

4. The display control device of claim 1, wherein when an operation to adjust the control level is made in the operation, the display control unit displays the control level for a predetermined amount of time in a predetermined central region of the display unit and after the elapse of the predetermined amount of time stops the display in the central region.

5. The display control device of claim 1, wherein the display control unit changes the color scheme of an indicator indicating the control level in accordance with stages of the control level.

6. The display control device of claim 1, wherein when a specific type of behavior control is activated when the control level is a predetermined lowness, the display control unit flashingly displays an indicator of a display mode indicating that the level of driving proficiency is high and a behavior control indicator.
